# EUROPÄISCHE PATENTANMELDUNG

(11) **EP 3 483 811 A1**
(43) Veröffentlichungstag der Anmeldung: **15.05.2019**
(21) Anmeldenummer: 17200736.1
(22) Anmeldetag: 09.11.2017
(51) Int. Cl.: G06Q 20/00

(54) **VERFAHREN ZUM HERSTELLEN EINES PRODUKTES MITTELS EINER GETRÄNKEZUBEREITUNGSMASCHINE, SYSTEM ZUR DURCHFÜHRUNG DES VERFAHRENS UND MASCHINEN-BACKEND FÜR EINE GETRÄNKEZUBEREITUNGSMASCHINE**

(71) Anmelder: Tchibo GmbH, 22297 Hamburg (DE)
(72) Erfinder: Kroos, Friedrich, 8606 Greifensee (CH); Franke, Dominik, 8306 Brüttisellen (CH)
(74) Vertreter: Frei Patent Attorneys

(57) **Zusammenfassung**

Ein Verfahren zum Herstellen eines Produktes mittels einer Getränkezubereitungsmaschine (1) weist die Schritte auf:
• mittels eines Maschinen-Backends (2) zu einer Getränkezubereitungsmaschine (1), Empfangen eines Backend-Auftrags (32), wobei der Backend-Auftrag (32) einen Identifikator (44) zur Identifikation einer Zubereitungsvorschrift (14) aufweist sowie einen Konfigurationsidentifikator;
• Bestimmen einer Zubereitungsvorschrift (14) durch Ermitteln,
∘ falls der Identifikator (44) gleich einem individuellen Identifikator (24) ist, einer Zubereitungsvorschrift (14), welche in einem von mehreren Benutzerprofilen (26) dem individuellen Identifikator (24) zugeordnet ist, wobei das Benutzerprofil (26) entsprechend dem Konfigurationsidentifikator bestimmt wird;

• mittels des Maschinen-Backends (2), Erzeugen eines Maschinen-Auftrags (22) an die Getränkezubereitungsmaschine (1), wobei der Maschinen-Auftrag (22) die Zubereitungsvorschrift (14) spezifiziert;
• mittels der Getränkezubereitungsmaschine (1), Herstellen des Produktes entsprechend der Zubereitungsvorschrift (14).

## Beschreibung

Die Erfindung betrifft Getränkezubereitungsmaschinen zum Zubereiten von Getränken oder dergleichen, beispielsweise aus einer Portionspackung mit einer Portionsverpackung (bspw. Kapsel) und einem in der Portionsverpackung enthaltenen Extraktionsgut (bspw. Kaffee). Sie betrifft insbesondere ein Verfahren zum Herstellen eines Produktes mittels einer Getränkezubereitungsmaschine, ein System zur Durchführung des Verfahrens und ein Maschinen-Backend für eine Getränkezubereitungsmaschine.

Getränkezubereitungsmaschinen zum Zubereiten von Getränken oder dergleichen aus einem in einer Portionsverpackung vorhandenen Extraktionsgut sind beispielsweise als Kaffee- oder Espressomaschinen bekannt. In vielen entsprechenden Systemen sind die Portionsverpackungen als Kapsel ausgebildet, in denen das Extraktionsgut bspw. luftdicht abgeschlossen ist. Für die Extraktion wird die Kapsel in einer Kapselaufnahme platziert und angestochen, beispielsweise an zwei einander gegenüberliegenden Seiten. Auf der ersten Seite wird dann eine Extraktionsflüssigkeit - im Allgemeinen heisses Wasser - eingeleitet. Auf der zweiten Seite wird das Extraktionsprodukt aus der Kapsel ausgeleitet. Dies geschieht in einem sogenannten Brühmodul.

Neben einem Brühmodul können eine oder mehrere weitere Einheiten zum Fördern und Beifügen einer weiteren Getränkekomponente wie beispielsweise Milch vorliegen. So kann die Getränkezubereitungsmaschine ein Getränk oder allgemein gesprochen ein Gesamtprodukt aus zwei Teilprodukten herstellen.

Die europäische Patentanmeldung Nr. 15 194 735 beschreibt ein Verfahren zum Betrieb einer Getränkezubereitungsmaschine zum Herstellen eines Produktes aus mehreren Teilprodukten, wobei Mengenanteile der Teilprodukte durch einen Benutzer auf einer grafischen Anzeige der Mengenanteile angepasst werden können.

Die europäische Patentanmeldung Nr. 15 194 667 beschreibt ein Verfahren zum Betrieb einer Getränkezubereitungsmaschine unter Verwendung von Zubereitungsparametern, die anhand eines Portionencodes einer Portionspackung bestimmt werden. Dabei sind einzelne Zubereitungsparameter durch einen Benutzer anpassbar.

In den oben genannten Patentanmeldungen ist unter anderem die Option einer Kommunikation der Getränkezubereitungsmaschine mit einem Bediengerät beschrieben, welches mobil und tragbar sein kann, beispielsweise ein Mobiltelefon oder Smartphone. Mit dem Bediengerät können Zubereitungsvorschriften oder Rezepte an die Getränkezubereitungsmaschine übermittelt werden, oder Zubereitungsvorschriften, welche in der Getränkezubereitungsmaschine gespeichert sind, können modifiziert werden. Eine Zubereitungsvorschrift kann beispielsweise Mengenverhältnisse von Teilprodukten und/oder Herstellungsparameter wie Brühzeiten und -Temperaturen gemäss individuellen Vorlieben von Benutzern definieren. Somit können in einer Getränkezubereitungsmaschine individualisierte Zubereitungsvorschriften gespeichert sein. Solche individualisierten Zubereitungsvorschriften können auch einen eigenen, individualisierten Namen aufweisen, beispielsweise "Karl's Kaffee" oder "Morgan's Kaffee".

Zubereitungsvorschriften können, je nachdem, wie ein User-Interface ausgestaltet ist, an der Getränkezubereitungsmaschine und/oder am Bediengerät ausgewählt werden. In einem anschliessenden Schritt kann die Herstellung des Produktes entsprechend der gewählten Zubereitungsvorschrift ausgelöst werden. Auch dies kann an der Getränkezubereitungsmaschine und/oder am Bediengerät oder beiden geschehen.

Als Alternative oder ergänzend zum vorangehend beschriebenen ist es denkbar, eine Auswahl einer Zubereitungsvorschrift über ein sprachgesteuertes System vorzunehmen. Dabei kann auf eine existierende Infrastruktur zur Spracherkennung und Befehlsverarbeitung zurückgegriffen werden. Ein solches bestehendes System ist beispielsweise das Gerät "Amazon Echo" in Kombination mit Alexa Voice Services in der Amazon-Cloud. Andere bekannte Systeme sind "Google Home" von Google und "Siri" von Apple.

Nebst standardisierten Funktionen bietet Amazon eine Infrastruktur für Funktionen für Drittanbieter, sogenannte Skills. Damit können Sprachbefehle an das Amazon Echo-Gerät, welche sich auf diese Funktionen der Drittanbieter beziehen, erkannt werden und an Server des Drittanbieters weitergeleitet werden. Ebenso können Antworten vom Server des Drittanbieters verarbeitet werden und daraus der Situation entsprechende Antworten an den Benutzer generiert und in gesprochener Form durch Amazon Echo ausgegeben werden.

Mit dem System könnte ein Name einer Zubereitungsvorschrift, im Folgenden der Kürze wegen auch Rezeptname genannt, erkannt und einer Getränkezubereitungsmaschine als gewählte Zubereitungsvorschrift übermittelt werden, als Teil eines Befehls zum Zubereiten eines Getränkes.

In Kombination mit den beschriebenen individualisierten Zubereitungsvorschriften ergibt sich aber das Problem, dass Personen ihre Rezepte beliebig nennen, schreiben und aussprechen können. Alexa ist diesbezüglich aber eingeschränkt: So erkennt Alexa z.B. bei dem Wort "Morgan's Kaffee" je nachdem "Morgans Kaffee", "Morgan's Kaffee", "Morgens Kaffee", "Morgens Café", "Morgenkaffee", "Morgenskaffee", etc. Ausgehend von solch unterschiedlichen möglichen Interpretationen ist eine Zuordnung einer Spracheingabe zu dem tatsächlichen Rezeptnamen sehr schwierig.

Ferner ist keine Lösung für Drittanbieter vorgesehen, mit welcher individuelle Namen von Zubereitungsvorschriften hinterlegt werden können. Es ist nur möglich, für einen Skill, beispielsweise den Skill "Kaffeemaschinensteuerung des Herstellers Qbo" eine Menge von Rezeptnamen zu hinterlegen, welche für alle Nutzer des Skills global dieselben sind. Dies würde bedeuten, dass das Spracherkennungssystem bei sämtlichen Maschinen dieses Herstellers sämtliche individuellen Rezeptnamen aller Maschinen respektive aller Benutzer kennen müsste - aber die meisten gar nicht umgesetzt werden könnten, weil sie nur auf einer Maschine gespeichert und erwünscht sind.

Es ist eine mögliche Aufgabe der Erfindung, einem Benutzer zu ermöglichen, die Herstellung von Getränken gemäss individualisierten Rezepten (respektive Zubereitungsvorschriften) durch Spracheingabe zu steuern, obwohl eine dazu eingesetzte Infrastruktur zur Spracherkennung keine individualisierten Sprachbefehle zulässt.

Es ist eine mögliche Aufgabe der Erfindung, einem Benutzer zu ermöglichen, Getränke gemäss individualisierten Rezepten (respektive Zubereitungsvorschriften) herzustellen, mit einer relativ hohen Zuverlässigkeit der Spracherkennung.

Mindestens eine dieser Aufgaben lösen ein Verfahren zum Herstellen eines Produktes mittels einer Getränkezubereitungsmaschine, ein System zur Durchführung des Verfahrens und ein Maschinen-Backend für eine Getränkezubereitungsmaschine.

Es ist deshalb Aufgabe der Erfindung, ein Verfahren zum Herstellen eines Produktes mittels einer Getränkezubereitungsmaschine, ein System zur Durchführung des Verfahrens und ein Maschinen-Backend für eine Getränkezubereitungsmaschine der eingangs genannten Art zu schaffen, welche die oben genannten Nachteile beheben.

Das Verfahren zum Herstellen eines Produktes mittels einer Getränkezubereitungsmaschine weist die folgenden Schritte auf:
- mittels eines Maschinen-Backends zu einer Getränkezubereitungsmaschine, Empfangen eines Backend-Auftrags, wobei der Backend-Auftrag einen Identifikator zur Identifikation einer Zubereitungsvorschrift aufweist sowie einen Konfigurationsidentifikator;
- Bestimmen einer Zubereitungsvorschrift durch Ermitteln,
   ∘ falls der Identifikator gleich einem individuellen Identifikator ist, einer Zubereitungsvorschrift, welche in einem von mehreren Benutzerprofilen dem individuellen Identifikator zugeordnet ist, wobei das Benutzerprofil entsprechend dem Konfigurationsidentifikator bestimmt wird;
- mittels des Maschinen-Backends, Erzeugen eines Maschinen-Auftrags an die Getränkezubereitungsmaschine, wobei der Maschinen-Auftrag die Zubereitungsvorschrift spezifiziert;
- mittels der Getränkezubereitungsmaschine, Herstellen des Produktes entsprechend der Zubereitungsvorschrift.

Damit wird es möglich, dass ein Spracherkennungs-Backend, welches den Backend-Auftrag erzeugt, lediglich eine relativ kleine Menge von Identifikatoren erkennen können muss. Diese Identifikatoren sind allen Benutzern von Getränkezubereitungsmaschinen, die mit dem Verfahren angesteuert werden, gemeinsam, und somit auch allen individuellen Konfigurationen von Spracherkennungsgeräten und Benutzern und Getränkezubereitungsmaschinen gemeinsam. Diese Menge von Identifikatoren kann beispielsweise zwanzig oder weniger, oder vierzig oder weniger oder sechzig oder weniger Identifikatoren umfassen.

Indem eine Gruppe der Identifikatoren individuelle Identifikatoren sind, zu denen individuelle Zubereitungsvorschriften jeweils spezifisch für einen Benutzer hinterlegt werden können, ist die Herstellung von individuellen Produkten für die Benutzer möglich, obschon nur standardisierte individuelle Identifikatoren durch das Sprachinterface verarbeitet werden.

Indem nur eine beschränkte Menge von Identifikatoren und damit verbundenen Sprachbefehlen vorliegt, kann eine Infrastruktur, welche nur eine solche beschränkte Menge von Sprachbefehlen verarbeiten kann, genutzt werden.

Indem nur eine beschränkte Menge von Identifikatoren und damit verbundenen Sprachbefehlen vorliegt, kann eine Zuverlässigkeit der Spracherkennung erhöht werden, verglichen mit einer Situation, in welcher eine grosse Anzahl von Sprachbefehlen erkannt und voneinander unterschieden werden müssen. Zudem kann bei der Auswahl der beschränkten Menge von Sprachbefehlen darauf geachtet werden, dass diese sich gut voneinander unterscheiden lassen, also nicht ähnlich klingen.

Im Maschinen-Backend geschieht die Individualisierung der Aufträge, indem jeweils anhand eines Identifikators ermittelt wird, ob der Auftrag einen generischen Identifikator oder einen individuellen Identifikator aufweist. Falls ein individueller Identifikator vorliegt, ist die daraus ermittelte Zubereitungsvorschrift von einem Konfigurationsidentifikator abhängig.

Der Konfigurationsidentifikator identifiziert eine bestimmte Konfiguration eines konkreten Sprachinterfaces, mindestens einer Getränkezubereitungsmaschine und eines Benutzerprofil, also deren Zuordnung zueinander. Diese Zuordnung kann als Konfigurationsinformation bezeichnet werden. Die Konfigurationsinformation ordnet einen Interface-Identifikator des Sprachinterfaces einem Benutzeridentifikator und/oder mindestens einem Maschinenidentifikator zu.

Somit kann der Konfigurationsidentifikator, je nach Ausführungsform, gleich dem Interface-Identifikator oder dem Benutzeridentifikator oder dem Maschinenidentifikator sein.

Ein Benutzer kann mehrere Getränkezubereitungsmaschine nutzen. Entsprechend können einem Benutzeridentifikator mehrere Maschinenidentifikatoren zugeordnet sein. Auch einem Sprachinterface können mehrere Getränkezubereitungsmaschinen zugeordnet sein. Entsprechend können in der Konfigurationsinformation einem Interface-Identifikator mehrere Maschinenidentifikatoren zugeordnet sein.

Anhand der Konfigurationsinformation kann ausgehend vom Sprachinterface, von welchem der Auftrags stammt, ermittelt werden, für welchen Benutzer und/oder welche Getränkezubereitungsmaschine der Auftrag gilt. Diese Ermittlung kann, je nach Ausführungsform, im Spracherkennungs-Backend oder im Maschinen-Backend geschehen.

Ein Erfassen der Konfigurationsinformation, also der Zuordnung zwischen Sprachinterface und Benutzer und/oder Getränkezubereitungsmaschine, kann bei einer Anmeldung eines Benutzers am Sprachinterface geschehen, wobei ein Interface-Identifikator des Sprachinterfaces einem Benutzeridentifikator und/oder Maschinenidentifikator zugeordnet werden kann.

Die Verwendung eines Benutzeridentifikators respektive eines damit verbundenen Benutzerprofils macht es möglich, dass ein Benutzer individuelle Zubereitungsvorschriften pflegen und nutzen kann, unabhängig von der Getränkezubereitungsmaschine, welche er benutzt. Dann sind die individuellen Zubereitungsvorschriften vorteilhafterweise im Maschinen-Backend gespeichert und dem Benutzeridentifikator zugeordnet, und ebenso die individuellen Identifikatoren und optional auch Zuordnungsvorschriften (siehe unten).

Der Schritt des Herstellens des Produktes mittels der Getränkezubereitungsmaschine kann Teilschritte enthalten zum Bestätigen der Korrektheit der ausgewählten Zubereitungsvorschrift, und/oder zum Prüfen, ob die Herstellung möglich ist, und/oder zum separaten Auslösen der Herstellung durch einen weiteren Bedienschritt durch den Benutzer. Dabei kann dieser Bedienschritt eine Interaktion mit der Getränkezubereitungsmaschine, dem Sprachinterface oder einem abgesetzten und mit der Getränkezubereitungsmaschine kommunizierenden Bediengerät sein, beispielsweise einem Smartphone.

In Ausführungsformen weist der Schritt zum Bestimmen einer Zubereitungsvorschrift den Schritt auf:
- Ermitteln,
   ∘ falls der Identifikator gleich einem generischen Identifikator ist, einer Zubereitungsvorschrift, welche diesem zugeordnet ist, wobei die Zuordnung unabhängig von einem Benutzerprofil ist.

Dies kann anhand einer Liste geschehen, welche jeweils einem generischen Identifikator eine Zubereitungsvorschrift zuordnet. Eine solche Liste oder allgemein die damit realisierte Zuordnung ist typischerweise im Maschinen-Backend gespeichert. In anderen Ausführungsformen ist sie der Getränkezubereitungsmaschine gespeichert. Die Zuordnung ist generell also unabhängig von einer Konfigurationsinformation wie oben beschreiben, respektive von einem Benutzer respektive einem Benutzerprofil, und kann auch unabhängig vom Interface-Identifikator und/oder vom Maschinenidentifikator sein.

In Ausführungsformen übermittelt, falls dem individuellen Identifikator keine Zubereitungsvorschrift zugeordnet ist (also anhand des individuellen Identifikators kein Zubereitungsvorschrift ermittelt werden kann), das Maschinen-Backend einem Spracherkennungs-Backend eine Backend-Rückmeldung zur Ausgabe einer Fehlermeldung durch ein Sprachinterface.

Damit wird es möglich, einem Benutzer anzuzeigen, dass die Konfiguration des Systems bezüglich der Zubereitungsvorschrift für den empfangenen individuellen Identifikator unvollständig ist.

In Ausführungsformen ist einem individuellen Identifikator jeweils eine Zubereitungsvorschrift direkt zugeordnet, und sind individuelle Identifikatoren und zugeordnete Zubereitungsvorschriften im Maschinen-Backend gespeichert.

Damit ist es möglich, individuelle Zubereitungsvorschriften eines Benutzers unabhängig von einer bestimmten Getränkezubereitungsmaschine zu verwalten und zu nutzen.

In Ausführungsformen sind im Maschinen-Backend mehrere Benutzerprofile gespeichert, und weist jedes Benutzerprofil eine benutzerspezifische Liste der individuellen Identifikatoren und deren Zuordnung zu benutzerspezifischen Zubereitungsvorschriften auf.

Damit ist es möglich, individuelle Zubereitungsvorschriften mehrerer Benutzer zu verwalten und zu nutzen. Dabei kann anhand eines Konfigurationsidentifikators, also eines Benutzeridentifikators oder eines Interface-Identifikators oder eines Maschinenidentifikators die Auswahl des Benutzerprofils geschehen.

In Ausführungsformen spezifiziert der Maschinen-Auftrag die Zubereitungsvorschrift entsprechend dem individuellen Identifikator oder dem generischen Identifikator, indem der Maschinen-Auftrag diese Zubereitungsvorschrift aufweist.

Es wird also die Zubereitungsvorschrift an die Getränkezubereitungsmaschine übermittelt und in der Getränkezubereitungsmaschine zur Herstellung verwendet. Zur Bestimmung der Zubereitungsvorschrift liegt im Maschinen-Backend eine gespeicherte Liste von Zubereitungsvorschriften und deren Zuordnung zu individuellen Identifikatoren respektive generischen Identifikatoren vor.

In Ausführungsformen spezifiziert der Maschinen-Auftrag die Zubereitungsvorschrift entsprechend dem individuellen Identifikator oder dem generischen Identifikator, indem der Maschinen-Auftrag den individuellen Identifikator respektive den generischen Identifikator aufweist.

Es wird also der individuelle Identifikator an die Getränkezubereitungsmaschine übermittelt, und in der Getränkezubereitungsmaschine wird anhand einer gespeicherten Liste von Zubereitungsvorschriften diejenige ausgewählt und zur Herstellung verwendet, welche dem individuellen Identifikator respektive dem generischen Identifikator entspricht. Ein Konfigurationsinformation ist dabei implizit enthalten, da die konkrete Getränkezubereitungsmaschine anhand dieser Information ermittelt wurde und selber nur einen Satz von individuellen Identifikatoren kennt.

In Ausführungsformen sind Zubereitungsvorschriften jeweils einem individuellen Identifikator indirekt über eine Zuordnungsvorschrift und einen persönlichen Identifikator zugeordnet.

In Ausführungsformen ist einem individuellen Identifikator jeweils eine Zubereitungsvorschrift indirekt über eine Zuordnungsvorschrift und einen persönlichen Identifikator zugeordnet, und wird die Zuordnungsvorschrift anhand von einer Konfigurationsinformation ermittelt, welche eine Zuordnung der Zuordnungsvorschrift zu einem Konfigurationsidentifikator aufweist, insbesondere in Form von einer oder mehrerer der folgenden Informationen:
- eine Zuordnung der Zuordnungsvorschrift zu einem Maschinenidentifikator;
- eine Zuordnung der Zuordnungsvorschrift zu einem Interface-Identifikator;
- eine Zuordnung der Zuordnungsvorschrift zu einem Benutzeridentifikator.

Ausgehend von einem individuellen Identifikator wird über die Zuordnungsvorschrift ein zugeordneter persönlicher Identifikator ermittelt, und wiederum ausgehend von diesem eine zugeordnete Zubereitungsvorschrift.

Allgemein gilt, dass solche Zuordnungen im System, insbesondere im Maschinen-Backend, direkt repräsentiert sein können, oder indirekt über andere Identifikatoren. In beiden Varianten (direkt oder indirekt) erlauben die Konfigurationsinformationen, anhand eines gegebenen Maschinenidentifikators, Interface-Identifikators, Benutzeridentifikator etc. eindeutig eine von mehreren Zuordnungsvorschriften zu bestimmen.

In Ausführungsformen sind also mehrere Zuordnungsvorschriften im Maschinen-Backend gespeichert. Die in einem bestimmten Auftrag verwendete Zuordnungsvorschrift wird im Maschinen-Backend anhand der Konfigurationsinformation bestimmt.

In Ausführungsformen weist das Verfahren den Schritt auf:
- mittels eines Sprachinterfaces und eines Spracherkennungs-Backends, Erfassen einer Spracheingabe und Erzeugen, entsprechend der Spracheingabe, des Backend-Auftrags an das Maschinen-Backend zu der Getränkezubereitungsmaschine, wobei der Backend-Auftrag den Identifikator zur Identifikation einer Zubereitungsvorschrift aufweist.

Das Sprachinterface ist typischerweise ein Gerät mit einem Mikrofon, einem Lautsprecher und einer Datenverarbeitungseinheit, welche dazu eingerichtet ist, akustische Signale mit dem Mikrofon zu erfassen, zu digitalisieren und als Auftrags-Sprachdatei an ein Spracherkennungs-Backend zu übermitteln, und Rückmeldungs-Sprachdateien vom Spracherkennungs-Backend zu erhalten und als akustische Signale mit dem Lautsprecher auszugeben.

Das Spracherkennungs-Backend kann die Auftrags-Sprachdatei verarbeiten und Bestimmen, ob diese einen Auftrag zum Herstellen eines Produktes mittels einer Getränkezubereitungsmaschine enthält, und, wenn dies der Fall ist, den Identifikator ermitteln.

Das Erzeugen eines Auftrags (Backend-Auftrag oder Maschinen-Auftrag) umfasst jeweils das Übermitteln an einen Empfänger des Auftrags. Das Übermitteln kann mittels eines Push- oder eines Pull-Verfahrens geschehen.

In Ausführungsformen geschieht eine Übermittlung des Maschinen-Auftrags an die Getränkezubereitungsmaschine mittels eines Pull-Verfahrens, indem die Getränkezubereitungsmaschine beim Maschinen-Backend nachfragt, ob ein Maschinen-Auftrag vorliegt, und beim Vorliegen eines Maschinen-Auftrags dessen Übermittlung an die Getränkezubereitungsmaschine auslöst.

In Ausführungsformen weist das Verfahren die zusätzlichen Schritte auf:
- mittels der Getränkezubereitungsmaschine, Erzeugen einer Maschinen-Rückmeldung an das Maschinen-Backend;
- mittels des Maschinen-Backends, Erzeugen einer entsprechenden Backend-Rückmeldung an das Sprachinterface;
- mittels des Sprachinterface, Ausgabe einer Sprachmitteilung entsprechend der Backend-Rückmeldung.

Die Maschinen-Rückmeldung kann beispielsweise Informationen der folgenden Art enthalten:
- Bestätigung, dass die Auswahl der Zubereitungsvorschrift durch das Getränkezubereitungsmaschine empfangen wurde;
- Bestätigung der Auswahl der Zubereitungsvorschrift zusammen mit einer Bezeichnung der Zubereitungsvorschrift;
- Fehlermeldungen betreffend den Zustand der Getränkezubereitungsmaschine, beispielsweise wenn Wasser fehlt, keine Portionspackung vorliegt, eine Portionspackung vorliegt, die nicht zur Zubereitungsvorschrift passt.

Das System weist eine Getränkezubereitungsmaschine und ein Maschinen-Backend auf, und ist zur Durchführung des Verfahrens konfiguriert.

Das Maschinen-Backend für eine Getränkezubereitungsmaschine ist zur Durchführung der folgenden Schritte konfiguriert
- Empfangen eines Backend-Auftrags, wobei der Backend-Auftrag einen Identifikator zur Identifikation einer Zubereitungsvorschrift aufweist sowie einen Konfigurationsidentifikator;
- Bestimmen einer Zubereitungsvorschrift durch Ermitteln,
   ∘ falls der Identifikator gleich einem individuellen Identifikator ist, einer Zubereitungsvorschrift, welche in einem Benutzerprofil dem individuellen Identifikator zugeordnet ist, wobei das Benutzerprofil entsprechend dem Konfigurationsidentifikator bestimmt wird;
- Erzeugen eines Maschinen-Auftrags an die Getränkezubereitungsmaschine, wobei der Maschinen-Auftrag die Zubereitungsvorschrift spezifiziert.

Das Maschinen-Backend ist typischerweise ein Datenverarbeitungssystem und weist Speichermittel mit darin gespeicherten Computerprogrammcodemitteln auf, welche ein Computerprogramm beschreiben, und Datenverarbeitungsmittel zur Ausführung des Computerprogramms, wobei die Ausführung des Computerprogramms zur Durchführung des Verfahrens gemäss der Erfindung führt.

Ein Verfahren zur Auswahl eines durch eine Getränkezubereitungsmaschine herzustellenden Produkts, welches ohne eine Herstellung des Produkts durchführbar ist, weist die oben als im Maschinen-Backend durchgeführt genannten Schritte auf.

Ein entsprechendes Computerprogramm ist auf einer Datenverarbeitungseinheit ladbar und ausführbar, und führt bei seiner Ausführung das Verfahren mit den oben als im Maschinen-Backend durchgeführt genannten Schritte aus.

Das Computerprogramm ist typischerweise in einen internen Speicher einer digitalen Datenverarbeitungseinheit ladbar und weist Computerprogrammcodemittel auf, welche, wenn sie in einer digitalen Datenverarbeitungseinheit ausgeführt werden, diese zur Ausführung des erfindungsgemässen Verfahrens bringen. In einer Ausführungsform der Erfindung weist ein Computerprogrammprodukt einen Datenträger, respektive ein computerlesbares Medium auf, auf welchem die Computerprogrammcodemittel gespeichert sind.

Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- **Figur 1**: eine Struktur eines Systems zum Herstellen eines Produktes mit einer Getränkezubereitungsmaschine;
- **Figur 2**: Alternative Formen eines Maschinen-Backends und einer Getränkezubereitungsmaschine; und
- **Figur 3**: ein Flussdiagramm eines Verfahrens zum Betrieb des Systems.

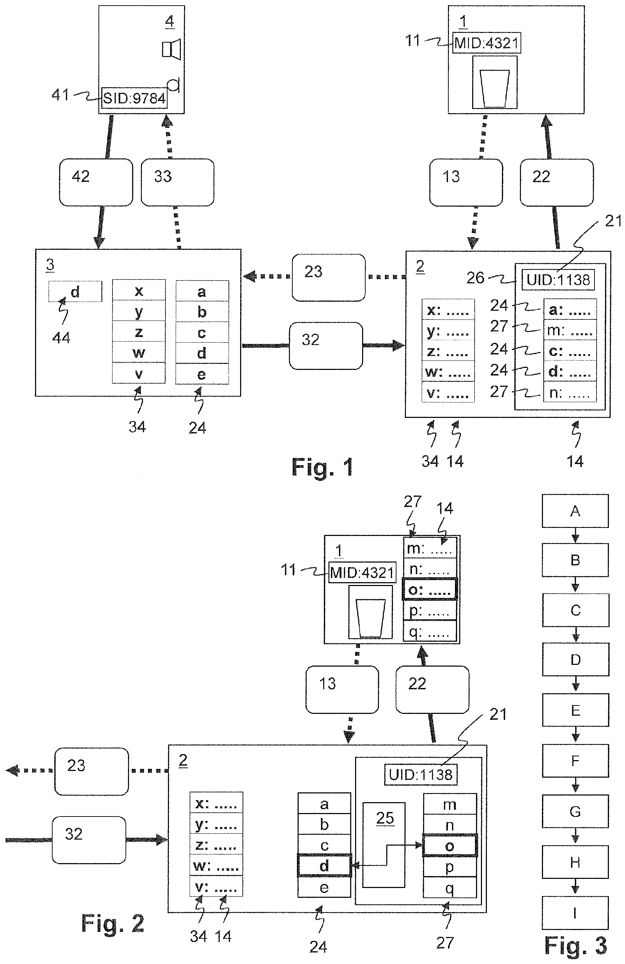

**Figur 1** zeigt schematisch eine Struktur eines Systems zum Herstellen eines Produktes mittels einer Getränkezubereitungsmaschine unter Verwendung eines Systems zur Spracheingabe und -Ausgabe. Das System weist eine Getränkezubereitungsmaschine 1, ein Maschinen-Backend 2, ein Spracherkennungs-Backend 3 und ein Sprachinterface 4 auf.

Die Getränkezubereitungsmaschine 1 ist zur Herstellung eines Getränkes, auch Produkt genannt, mit einem oder mehreren Teilprodukten, nach Massgabe von Zubereitungsvorschriften oder Rezepten 14 ausgebildet. Die Getränkezubereitungsmaschine 1 weist Mittel zur Datenverarbeitung und zur Kommunikation mit anderen Geräten auf, typischerweise über ein drahtgebundenes oder drahtloses Computernetzwerk. Zur eindeutigen Identifikation d.h. zur Unterscheidung von andern Getränkezubereitungsmaschinen weist sie einen Maschinenidentifikator 11 auf. Die Getränkezubereitungsmaschine 1 kann Zubereitungsvorschriften 14 empfangen oder speichern, anhand derer die Zubereitung von Produkten steuerbar ist. Jede der Zubereitungsvorschriften 14 ist durch einen Identifikator eindeutig bestimmt.

In der Ausführungsformen gemäss **Figur 1** sind Zubereitungsvorschriften 14 und ihre Zuordnung zu jeweils einem individuellen Identifikator 24 oder einem generischen Identifikator 34 im Maschinen-Backend 2 gespeichert. Die generischen Identifikatoren 34 sind Standard-Zubereitungsvorschriften 14 zugeordnet, welche für alle Benutzer definiert und unveränderlich sind. In den Figuren sind die generischen Identifikatoren 34 verkürzt mit x, y, z, w, v bezeichnet, in der Realität sind sie beispielsweise "Ristretto", "Espresso", "Caffè", "Caffè grande", "Caffè crema", "Caffè latte", "Caffè cappucino", "Milchschaum kalt", "Milchschaum warm", etc. Zusätzlich dazu können generische Identifikatoren 34 für analoge Bezeichnungen in anderen Sprachen, insbesondere Englisch, vorliegen.

Die individuellen Identifikatoren 24 sind individuellen Zubereitungsvorschriften 14 zugeordnet, welche durch die Benutzer anpassbar sind. Dabei können die individuellen Zubereitungsvorschriften 14 jeweils einem Benutzeridentifikator 21 (wie in der Figur dargestellt) und/oder einem Maschinenidentifikator 11 (nicht dargestellt) zugeordnet sein. Mit anderen Worten ist die Zuordnung zwischen individuellen Identifikatoren 24 und Zubereitungsvorschriften 14 jeweils benutzerabhängig und kann in einem Benutzerprofil 26, identifiziert durch den Benutzeridentifikator 21, gespeichert sein. In den Figuren sind die individuellen Identifikatoren 24 verkürzt mit a, b, c bezeichnet, in der Realität sind sie beispielsweise "Morgenkaffee", "Lieblingskaffee", "Muntermacher", etc. Zusätzlich dazu können individuelle Identifikatoren 24 für analoge Bezeichnungen in anderen Sprachen, insbesondere Englisch, vorliegen.

Ebenfalls als Teil des Benutzerprofils 26 können persönliche Identifikatoren 27 abgespeichert sein. Diese können durch den Benutzer und das Maschinen-Backend 2 in gleicher Weise definiert respektive verarbeitet werden. Sie unterscheiden sich von den individuellen Identifikatoren 24 dadurch, dass ihre Werte keine Entsprechung im Spracherkennungs-Backend 3 haben. In den Figuren sind die persönlichen Identifikatoren 27 verkürzt mit m, n, o, p, q bezeichnet, in der Realität sind sie beispielsweise "Karl's Kaffee", "Erich's Espresso", "Claudia's Cappucino", etc.

Das Maschinen-Backend 2 kann über eine Kommunikationsverbindung mit mehreren Getränkezubereitungsmaschinen 1 bidirektional kommunizieren.

Das Spracherkennungs-Backend 3 kann über eine weitere Kommunikationsverbindung mit dem Maschinen-Backend 2 bidirektional kommunizieren. Das Spracherkennungs-Backend 3 weist eine Spracherkennungssystem und ein domänenspezifisches Subsystem ("Skills") auf, welche darauf ausgerichtet ist, spezifische Befehle für einen bestimmten Anwendungsbereich - in diesem Fall die Ansteuerung von Getränkezubereitungsmaschinen 1 eines bestimmten Herstellers - zu erkennen und zu verarbeiten. Als Ergebnis der Verarbeitung kann das Subsystem unter anderem die Identifikatoren 44, also die generischen Identifikatoren 34 und die individuellen Identifikatoren 24 aus einem gesprochenen Befehl extrahieren.

Das Sprachinterface 4 weist ein Mikrofon, einen Lautsprecher und eine Datenverarbeitungseinheit. Es erfasst akustische Signale und übermittelt sie in digitaler Form als Auftrags-Sprachdatei 42 an das Spracherkennungs-Backend 3. Rückmeldungs-Sprachdateien 33 vom Spracherkennungs-Backend 3 werden als akustische Signale mit dem Lautsprecher ausgegeben.

Ein Beispiel für ein Spracherkennungs-Backend 3 ist das eingangs genannte von Amazon realisierte und durch Drittanbieter nutzbare Echo-System. Dieses weist ein "Alexa-Backend" zur Verarbeitung von Audiodaten des Amazon Echo-Gerätes als Sprachinterface 4 auf, sowie ein Lambda-System zur Realisierung von "Skills" für Drittanbieter. Das Lambda-System kann anhand der verarbeiteten Audiodateien einen Auftrag an eine Getränkezubereitungsmaschine 1 erkennen, sowie einen generischen Identifikator 34 aus einer beschränkten Menge von vorgegebenen generischen Identifikatoren 34 des Drittanbieters. Das Lambda-System ist eine Architektur von Amazon, wird in der Amazon-Cloud ausgeführt und realisiert Funktionalitäten, welche Skills für einen Drittanbieter mit Sprache verbinden.

In einem Registrierungsvorgang kann eine Zuordnung zwischen Maschinenidentifikator 11, Interface-Identifikator 41 und Benutzeridentifikator 21 vorgenommen werden. Damit wird eine Konfigurationsinformation definiert, und jeder dieser Identifikatoren kann als Konfigurationsidentifikator dienen. Anschliessend kann im Betrieb des Systems ein Auftrag, der durch das Sprachinterface 4 empfangen wird, einem Benutzer und/oder einer Getränkezubereitungsmaschine 1 zugeordnet werden. Damit können zu einem Auftrag lokale Informationen ermittelt werden wie Zuordnungsvorschriften 25 (siehe unten), individuelle Identifikatoren 24 und Zubereitungsvorschriften 14. Je nachdem wie das System betrieben wird, sind diese lokalen Informationen einem Benutzer oder einer Getränkezubereitungsmaschine 1 zugeordnet und werden über den Benutzeridentifikator 21 oder den Maschinenidentifikator 11 ermittelt.

Um eine individuelle Zubereitungsvorschrift 14 der Sprachsteuerung zugänglich zu machen, definiert ein Benutzer, beispielsweise über ein Konfigurationsprogramm, welches auf einem Bediengerät ausgeführt wird, eine Zubereitungsvorschrift 14 nach eigenem Geschmack und ordnet sie einem der vorgegebenen individuellen Identifikatoren 24 zu.

Beispielsweise stehen als individuelle Identifikatoren 24 zur Verfügung: "Morgenkaffee", "Favorit", "Muntermacher", .... Indem der Benutzer seiner selber definierten Zubereitungsvorschrift 14 unter einem dieser Namen abspeichert, ist die Zuordnung realisiert.

Wenn nun über das Sprachinterface 4 und das Spracherkennungs-Backend 3 der Befehl "Alexa, starte Qbo und mach mir einen Muntermacher" empfangen und verarbeitet wird, so wird der als "Muntermacher" benannte individuelle Identifikator 24 erkannt, und wird die unter dem Namen "Muntermacher" gespeicherte persönlich definierte Zubereitungsvorschrift 14 umgesetzt.

Wird ein Sprachbefehl "Alexa, starte Qbo und mach mir einen Ristretto" empfangen, so existiert dazu ein generischer Identifikator 34 und wird die dazu gespeicherte generische definierte Zubereitungsvorschrift 14 umgesetzt..

Wird ein Sprachbefehl "Alexa, starte Qbo und mach mir Karl's Kaffee" empfangen, so existiert dazu weder ein individueller Identifikator 24 noch ein generischer Identifikator 34 und das Spracherkennungs-Backend 3 erzeugt eine Rückmeldungs-Sprachdatei 33 mit einer entsprechenden Meldung an den Benutzer.

**Figur 2** zeigt eine alternative Ausführungsform des Maschinen-Backends 2. Die individuellen Identifikatoren 24 sind darin jeweils nicht direkt einer Zubereitungsvorschrift 14 zugeordnet, sondern indirekt über eine Zuordnungsvorschrift 25 und einen persönlichen Identifikator 27. Ein persönlicher Identifikator 27 kann, wie in der Ausführungsform der Figur 1, durch einen Benutzer definiert und einer Zubereitungsvorschrift 14 zugeordnet werden. Diese Zuordnung und damit die Zubereitungsvorschrift 14 kann im Maschinen-Backend 2 oder in der Getränkezubereitungsmaschine 1 gespeichert sein.

Eine Zuordnungsvorschrift 25 ordnet also jeweils einem individuellen Identifikator 24 einen persönlichen Identifikator 27 zu. Individuelle Identifikatoren 24 sind auch in dieser Ausführungsform allen Getränkezubereitungsmaschinen 1 und Benutzern gemeinsam. Persönliche Identifikatoren 27 sind jeweils individuell für einen Benutzer und/oder eine Getränkezubereitungsmaschine 1 anpassbar.

Im Beispiel der **Figur 2** sind Zubereitungsvorschriften 14 und zugeordnete persönliche Identifikatoren 27 in der Getränkezubereitungsmaschine 1 gespeichert, und ist die Zuordnungsvorschrift 25 von individuellen Identifikatoren 24 zu den persönlichen Identifikatoren 27 im Maschinen-Backend 2 gespeichert.

Im Maschinen-Backend 2 können Zuordnungsvorschriften 25 einzelnen Benutzern respektive Benutzeridentifikatoren 21 zugeordnet sein. Dann sind im Maschinen-Backend 2 Zuordnungsvorschriften 25 für mehrere Benutzer gespeichert.

Alternativ können Zuordnungsvorschriften 25 auch Getränkezubereitungsmaschinen 1 zugeordnet sein. Dann sind im Maschinen-Backend 2 Zuordnungsvorschriften 25 für mehrere Getränkezubereitungsmaschinen 1 gespeichert, wobei jeder der Getränkezubereitungsmaschinen 1 eine solche Zuordnungsvorschrift 25 direkt (beispielsweise durch den Maschinenidentifikator 11 der Getränkezubereitungsmaschine 1) oder indirekt (beispielsweise durch einen Benutzeridentifikator 21, der wiederum dem Maschinenidentifikator 11 zugeordnet ist) zugeordnet ist.

**Figur 3** zeigt ein Flussdiagramm eines Verfahrens zum Betrieb des Systems zum Herstellen eines Produktes mit einer Getränkezubereitungsmaschine. Die darin erwähnten Use Cases sind beispielsweise das Zubereiten eines Getränks, das Zubereiten eines Getränks zu einer bestimmten Zeit (absolut spezifiziert), das Zubereiten eines Getränks nach Ablauf einer bestimmten Zeit (relativ spezifiziert), die Anfrage nach den Möglichkeiten, welche die Getränkezubereitungsmaschine 1 bietet, etc. Im Verfahren können die folgenden Schritte ausgeführt werden.
A. Im Sprachinterface 4, beispielsweise ein Alexa- oder Echo-Gerät:
   a. Erkennt die Sprache des Benutzers, dekodiert die Sprachnachricht "Alexa <X>" und sendet <X> als Auftrags-Sprachdatei 42 an das Spracherkennungs-Backend 3.
B. Spracherkennungs-Backend 3, beispielsweise Alexa-Backend von Amazon:
   a. Erhält die Auftrags-Sprachdatei 42 mit rohen Sounddateien und dekodiert die Sounddateien in geschriebene Sprache.
   b. Wenn der Befehl an eine bestimmte Infrastruktur für die Getränkezubereitungsmaschinen 1 gerichtet ist, beispielsweise entsprechend einem in Amazon Alexa definierten "Skill", mit dem Befehl "Alexa starte Qbo und <Y>", so wird <Y> an das Lambda-System für Qbo versandt.
C. Spracherkennungs-Backend 3, beispielsweise Lambda-System von Amazon:
   a. Erkennt beispielsweise im Auftrag "Alexa, starte Qbo und brühe mir einen Espresso", dass der Begriff "Espresso" eine feste Variable entsprechend einem generischen Identifikator 34 für eine Standard-Zubereitungsvorschrift 14 von Qbo ist.
   b. Extrahiert alle Variablen (generischer Identifikator 34, Zeitangaben, Use Case, ...) und sendet diese als Backend-Auftrag 32 an das Maschinen-Backend 2.
D. Maschinen-Backend 2:
   a. Läuft auf Servern des Drittanbieters.
   b. Erhält den Backend-Auftrag 32: Maschine A möchte über Use Case B jetzt Variable C haben. Beispielsweise ist A ein bestimmter Maschinenidentifikator 11 (was bedeutet, dass eine Zuordnung zwischen Interface-Identifikator 41 und Maschinenidentifikator 11 anhand von Konfigurationsinformation im Spracherkennungs-Backend 3 durchgeführt wurde), ist der Use Case "Getränk herstellen", und ist C ein Identifikator 44, also ein individueller Identifikator 24 oder ein generischer Identifikator 34.
   c. Hält Zubereitungsvorschriften 14 für die individuellen Identifikatoren 24 und generischen Identifikatoren 34 bereit.
   d. Hält Kontakt zu allen Maschinen und sendet je nach Use Case die identifizierte Zubereitungsvorschrift 14 als Teil eines Maschinen-Auftrags 22 zu einer Maschine.
E. Getränkezubereitungsmaschine 1:
   a. Hält aktiv eine Verbindung zum Maschinen-Backend 2.
   b. Aus Sicherheitsgründen baut die Getränkezubereitungsmaschine 1 die Verbindung auf und zieht Rezepte, die an sie gerichtet sind, mit dem "Pull-Mechanismus" (kein Push möglich) vom Maschinen-Backend 2.
   c. Je nach Use Case löst sie die Brühung aus.
   d. Falls die Brühung ausgelöst werden kann, kann sie eine Bestätigung als Maschinen-Rückmeldung 13 dem Spracherkennungs-Backend 3 übermitteln. Andernfalls, z.B. wenn Wasser fehlt, kann sie eine Fehlermeldung als Maschinen-Rückmeldung 13 übermitteln.
F. Maschinen-Backend 2:
   a. Erhält die Rückmeldung und gibt diese über als Backend-Rückmeldung 23 an das Lambda-System des Spracherkennungs-Backends 3 weiter.
G. Spracherkennungs-Backend 3, Lambda-System:
   a. Erhält die Rückmeldung und verarbeitete sie entsprechend dem Use Case.
   b. Entscheidet, welche Antwort gegeben wird.
   c. Sendet die Antwort an das Alexa-Backend.
H. Spracherkennungs-Backend 3, Alexa-Backend:
   a. Erhält die Antwort und wandelt diese in eine Sprachdatei um.
   b. Übermittelt die Sprachnachricht als Rückmeldungs-Sprachdatei 33 an das Sprachinterface 4.
I. Sprachinterface 4, Alexa-Gerät:
   a. Gibt die Rückmeldungs-Sprachdatei 33 wieder.

Eine Steuereinheit der Getränkezubereitungsmaschine 1 weist einen Speicher auf, in welchem unter anderem Zubereitungsvorschriften oder Rezepte gespeichert sind. Eine Zubereitungsvorschrift weist mindestens Steuerinformationen auf, die in Befehle zur Steuerung der Getränkezubereitungsmaschine 1 umgesetzt werden können. Solche Steuerinformationen weisen einerseits Ablaufinformationen auf, welche einen Ablauf von Schritten spezifizieren, die durch die Getränkezubereitungsmaschine 1 zum Erzeugen eines Gesamtprodukte auszuführen sind. Andererseits weisen die Steuerinformationen beispielsweise Temperaturen, Volumenangaben, Zeitangaben, etc. auf - im Folgenden allgemein auch Zubereitungsparameter genannt - welche einen Ablauf parametrisieren.

Ablaufinformationen repräsentieren beispielsweise "Heizung der Zusatzeinheit einschalten; Pumpe des Brühmoduls während fünfzehn Sekunden einschalten; nach Abschalten der Pumpe mindestens fünf Sekunden warten bis Heizung auf Solltemperatur ist; Milchpumpe während zwölf Sekunden einschalten". Die in diesem Beispiel erwähnten Zeiten und Temperaturen können durch Zubereitungsparameter spezifiziert sein und/oder durch die Steuerung nach Massgabe von andern Zubereitungsparametern und Sensormesswerten bestimmt werden.

Eine Zubereitungsvorschrift kann auch Benutzeranweisungen enthalten. Diese Anweisungen sind Teil der Zubereitung des Gesamtproduktes und müssen durch einen Benutzer ausgeführt werden. Dazu können die Benutzeranweisungen mittels einer Ausgabeeinheit der Getränkezubereitungsmaschine oder eines Benutzerinterfaces eines abgesetzten Bediengerätes (beispielsweise eines Smartphones) angezeigt werden. Beispielsweise sind solche Benutzeranweisungen "Jetzt Eiswürfel hinzufügen" oder "Bitte 20ml Karamelsirup abmessen" oder "Jetzt den vorbereiteten Karamelsirup hinzufügen" oder "Bitte umrühren" oder "Bitte überprüfen, ob eingelegte Kapsel und angewähltes Rezept zusammenpassen" etc. Eine Benutzeranweisung kann von einer visuellen Darstellung begleitet sein, beispielsweise des herzustellenden Gesamtproduktes, einer ausgewählten oder einer tatsächlich eingelegten Kapsel etc.

Zur Zubereitung eines Produktes werden entsprechend der Zubereitungsvorschrift Steuerinformationen respektive entsprechende Befehle durch die Getränkezubereitungsmaschine 1 umgesetzt und damit ein Zubereitungsablauf realisiert. Falls Zubereitungsvorschrift Benutzeranweisungen aufweist, werden diese an entsprechenden Stellen des Ablaufs dem Benutzer angezeigt. Nach einer Quittierung durch den Benutzer mittels einer Eingabeeinheit der Getränkezubereitungsmaschine 1 oder dem Benutzerinterface, welche dem System die Ausführung der Benutzeranweisung bestätigt, werden nachfolgende Steuerinformationen des Zubereitungsablaufs umgesetzt.

Eine Zubereitungsvorschrift kann Zubereitungsparameter aufweisen, die durch den Benutzer angepasst werden dürfen, sowie Zubereitungsparameter, die nicht durch den Benutzer anpassbar sind. Anpassbare Zubereitungsparameter sind beispielsweise (Volumen)Anteile von Teilprodukten im Gesamtprodukt, eine Gesamtmenge, oder die Temperatur eines Teilproduktes. Für anpassbare Zubereitungsparameter kann die Zubereitungsvorschrift einen Standardwert oder Defaultwert enthalten, welcher verwendet wird, wenn der Benutzer den Parameter nicht anpasst.

## Patentansprüche

1. Verfahren zum Herstellen eines Produktes mittels einer Getränkezubereitungsmaschine (1), aufweisend die Schritte:
• mittels eines Maschinen-Backends (2) zu einer Getränkezubereitungsmaschine (1), Empfangen eines Backend-Auftrags (32), wobei der Backend-Auftrag (32) einen Identifikator (44) zur Identifikation einer Zubereitungsvorschrift (14) aufweist sowie einen Konfigurationsidentifikator;
• Bestimmen einer Zubereitungsvorschrift (14) durch Ermitteln,
∘ falls der Identifikator (44) gleich einem individuellen Identifikator (24) ist, einer Zubereitungsvorschrift (14), welche in einem von mehreren Benutzerprofilen (26) dem individuellen Identifikator (24) zugeordnet ist, wobei das Benutzerprofil (26) entsprechend dem Konfigurationsidentifikator bestimmt wird;
• mittels des Maschinen-Backends (2), Erzeugen eines Maschinen-Auftrags (22) an die Getränkezubereitungsmaschine (1), wobei der Maschinen-Auftrag (22) die Zubereitungsvorschrift (14) spezifiziert;
• mittels der Getränkezubereitungsmaschine (1), Herstellen des Produktes entsprechend der Zubereitungsvorschrift (14).

2. Verfahren gemäss Anspruch 1, wobei der Schritt zum Bestimmen einer Zubereitungsvorschrift (14) den Schritt aufweist:
• Ermitteln,
∘ falls der Identifikator (44) gleich einem generischen Identifikator (34) ist, einer Zubereitungsvorschrift (14), welche diesem zugeordnet ist, wobei die Zuordnung unabhängig von einem Benutzerprofil (26) ist.

3. Verfahren gemäss Anspruch 1 oder 2, wobei falls dem individuellen Identifikator (24) keine Zubereitungsvorschrift (14) zugeordnet ist, das Maschinen-Backend (2) einem Spracherkennungs-Backend (3) eine Backend-Rückmeldung (23) zur Ausgabe einer Fehlermeldung durch ein Sprachinterface (4) übermittelt.

4. Verfahren gemäss einem der vorangehenden Ansprüche, wobei einem individuellen Identifikator (24) jeweils eine Zubereitungsvorschrift (14) direkt zugeordnet ist, und individuelle Identifikatoren (24) und zugeordnete Zubereitungsvorschriften (14) im Maschinen-Backend (2) gespeichert sind.

5. Verfahren gemäss Anspruch 4, wobei im Maschinen-Backend (2) mehrere Benutzerprofile (26) gespeichert sind, und jedes Benutzerprofil (26) eine benutzerspezifische Liste der individuellen Identifikatoren (24) und deren Zuordnung zu benutzerspezifischen Zubereitungsvorschriften (14) aufweist.

6. Verfahren gemäss einem der Ansprüche 1 bis 5, wobei der Maschinen-Auftrag (22) die Zubereitungsvorschrift (14) entsprechend dem individuellen Identifikator (24) oder dem generischen Identifikator (34) spezifiziert, indem der Maschinen-Auftrag (22) diese Zubereitungsvorschrift (14) aufweist.

7. Verfahren gemäss einem der Ansprüche 1 bis 5, wobei der Maschinen-Auftrag (22) die Zubereitungsvorschrift (14) entsprechend dem individuellen Identifikator (24) oder dem generischen Identifikator (34) spezifiziert, indem der Maschinen-Auftrag (22) den individuellen Identifikator (24) respektive den generischen Identifikator (34) aufweist.

8. Verfahren gemäss einem der Ansprüche 1 bis 3, wobei einem individuellen Identifikator (24) jeweils eine Zubereitungsvorschrift (14) indirekt über eine Zuordnungsvorschrift (25) und einen persönlichen Identifikator (27) zugeordnet ist, und die Zuordnungsvorschrift (25) anhand von einer Konfigurationsinformation ermittelt wird, welche eine Zuordnung der Zuordnungsvorschrift (25) zu einem Konfigurationsidentifikator aufweist, insbesondere in Form von einer oder mehrerer der folgenden Informationen:
• eine Zuordnung der Zuordnungsvorschrift (25) zu einem Maschinenidentifikator (11);
• eine Zuordnung der Zuordnungsvorschrift (25) zu einem Interface-Identifikator (41);
• eine Zuordnung der Zuordnungsvorschrift (25) zu einem Benutzeridentifikator (21).

9. Verfahren gemäss einem der vorangehenden Ansprüche, mit dem Schritt:
• mittels eines Sprachinterfaces (4) und eines Spracherkennungs-Backends (3), Erfassen einer Spracheingabe und Erzeugen, entsprechend der Spracheingabe, des Backend-Auftrags (32) an das Maschinen-Backend (2) zu der Getränkezubereitungsmaschine (1), wobei der Backend-Auftrag (32) den Identifikator (44) zur Identifikation einer Zubereitungsvorschrift (14) aufweist.

10. Verfahren gemäss einem der vorangehenden Ansprüche, wobei eine Übermittlung des Maschinen-Auftrags (22) an die Getränkezubereitungsmaschine (1) mittels eines Pull-Verfahrens geschieht, indem die Getränkezubereitungsmaschine (1) beim Maschinen-Backend (2) nachfragt, ob ein Maschinen-Auftrag (22) vorliegt, und beim Vorliegen eines Maschinen-Auftrags (22) dessen Übermittlung an die Getränkezubereitungsmaschine (1) auslöst.

11. Verfahren gemäss einem der vorangehenden Ansprüche, mit den zusätzlichen Schritten:
• mittels der Getränkezubereitungsmaschine (1), Erzeugen einer Maschinen-Rückmeldung (13) an das Maschinen-Backend (2);
• mittels des Maschinen-Backends (2), Erzeugen einer entsprechenden Backend-Rückmeldung (23) an das Sprachinterface (4);
• mittels des Sprachinterface (4), Ausgabe einer Sprachmitteilung entsprechend der Backend-Rückmeldung (23).

12. System, aufweisend eine Getränkezubereitungsmaschine (1) und ein Maschinen-Backend (2), wobei das System zur Durchführung des Verfahrens gemäss einem der Ansprüche (1) bis (11) ausgebildet ist.

13. Maschinen-Backend (2) für eine Getränkezubereitungsmaschine (1), konfiguriert zur Durchführung der Schritte
• Empfangen eines Backend-Auftrags (32), wobei der Backend-Auftrag (32) einen Identifikator (44) zur Identifikation einer Zubereitungsvorschrift (14) aufweist sowie einen Konfigurationsidentifikator;
• Bestimmen einer Zubereitungsvorschrift (14) durch Ermitteln,
∘ falls der Identifikator (44) gleich einem individuellen Identifikator (24) ist, einer Zubereitungsvorschrift (14), welche in einem Benutzerprofil (26) dem individuellen Identifikator (24) zugeordnet ist, wobei das Benutzerprofils (26) entsprechend dem Konfigurationsidentifikator bestimmt wird;
• Erzeugen eines Maschinen-Auftrags (22) an die Getränkezubereitungsmaschine (1), wobei der Maschinen-Auftrag (22) die Zubereitungsvorschrift (14) spezifiziert.
